# FASCICULE DE BREVET EUROPEEN

(11) **EP 1 326 399 B1**
(45) Date de publication et mention de la délivrance du brevet: **27.07.2005**
(21) Numéro de dépôt: 02102699.2
(22) Date de dépôt: 06.12.2002
(51) Int. Cl.: H04L 29/06

(54) **Procédé de sécurisation déportée d'un téléchargement de données actives dans un terminal**
Verfahren zur Sicherung des Herunterladens von aktiven Daten auf ein Kommunikationsgerät
Method for securing the download of active data to a terminal

(30) Priorité: 31.12.2001 FR 0117097
(43) Date de publication de la demande: 09.07.2003
(73) Titulaire: Société Française du Radiotéléphone-SFR, 75008 Paris (FR)
(72) Inventeur: Bouthors, Nicolas, 38240 Meylan (FR)
(74) Mandataire: Schmit, Christian Norbert Marie

(56) Documents cités:
- WO-A-98/21683
- GB-A- 2 359 908
- WIRELESS APPLICATION PROTOCOL FORUM: "WAP Push Architectural Overview" WIRELESS APPLICATION PROTOCOL FORUM, 8 novembre 1999 (1999-11-08), XP002183436
- SEVANTO J: "Multimedia messaging service for GPRS and UMTS" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21 septembre 1999 (1999-09-21), pages 1422-1426, XP010353642 ISBN: 0-7803-5668-3

## Description

La présente invention a pour objet un procédé de sécurisation déportée d'un téléchargement de données actives dans un terminal. Le domaine de l'invention est celui des réseaux dans lesquels il est possible d'accéder à ces données, cet accès étant subordonné à la souscription d'un abonnement auprès d'un fournisseur d'accès. De tels réseaux sont, par exemple, le réseau Internet pour les particuliers, ou les réseaux de téléphonie mobile. Pour accéder à des données et à ces réseaux, un utilisateur d'un terminal permettant de se connecter à ces réseaux est en effet obligé de souscrire à un abonnement. Un but de l'invention est de renforcer la confiance des utilisateurs en de tels réseaux. Un autre but de l'invention est de minimiser l'impact, sur les utilisateurs finaux, des procédures de sécurisation.

Dans l'état de la technique on connaît des systèmes permettant de recevoir sur un appareil, par exemple un ordinateur personnel, des contenus, ou données, dits actifs, ou actives. Un contenu est dit actif lorsque son interprétation met en oeuvre des capacités de l'appareil, sur lequel il est interprété, autre que ses capacités d'affichage. Les capacités d'un appareil sont, en dehors de ces capacités d'affichage et par exemple, des capacités de communication, des capacités de stockage, et des capacités de traitement.

Dans l'état de la technique, et dans le domaine des ordinateurs personnels, il existe au moins deux principaux types de contenu actif. Il existe des contenus actifs acceptés par défauts, par exemple des scripts, des "applets" de type java, et des contenus actifs dont le téléchargement et la mise en oeuvre sont soumis à une autorisation de l'utilisateur de l'appareil. Ces derniers contenus actifs sont connus sous le nom de "plug-in", ou extension, d'une application de navigation. Lors du téléchargement d'une telle extension l'utilisateur se voit demander si il accepte ladite extension. Pour faciliter son choix ladite extension est accompagnée d'un certificat lui permettant d'identifier l'organisme, ou le prestataire, émettant l'extension. Une telle extension permet d'accroître le contrôle, par exemple d'un logiciel de navigation, sur l'appareil utilisé pour la mise en oeuvre de ce logiciel.

Les deux types de contenus actifs précités arrivent sur un appareil d'un utilisateur suite à une sollicitation effectuée par cet utilisateur. C'est-à-dire qu'un utilisateur a émis une requête, par exemple selon le protocole HTTP (Hyper Text Transfert Protocol, c'est-à-dire protocole de transfert d'hyper texte), pour recevoir une page web, donc un fichier au format HTML (Hyper Test Markup Language, c'est-à-dire langage de balise hyper texte ). Ce fichier au format HTML comporte alors ces contenus actifs qui sont interprétés par le logiciel de navigation.

Un premier problème apparaît déjà en ce que la manipulation des certificats, accompagnant les extensions, n'est pas naturelle pour un utilisateur. Ainsi, le logiciel de navigation pose la question de savoir si l'utilisateur accepte l'extension qui a été émise par tel ou tel organisme. La plupart du temps l'utilisateur ne comprend pas le "jargon" accompagnant cette question et ne cherche pas à vérifier la validité du certificat. Dès lors il est possible pour des personnes malveillantes de se faire passer pour un organisme ayant une réputation bienveillante, ou tout simplement de ce donner les apparences de la bienveillance. Ainsi l'utilisateur averti préférera, la plupart du temps, refuser les extensions plutôt que de courir le moindre risque. Par là même, dans un souci de précaution, l'utilisateur limite les prestations auxquelles il pourrait avoir accès si il existait un système lui permettant d'avoir une confiance plus importante dans le mode de diffusion desdites extensions.

Ce problème existe aussi dans le monde de la téléphonie mobile. On rappelle qu'il est en effet possible d'accéder à Internet, donc à des contenus actifs tels que précités, avec un téléphone mobile. Cependant ce problème est encore plus aigu car, dans la téléphonie mobile, il existe un mode dit "push". Dans ce mode, l'utilisateur d'un terminal de téléphonie mobile est susceptible de recevoir des contenus actifs sans en avoir solliciter la réception. L'existence d'un tel mode de fonctionnement trouve son fondement dans le fait qu'il faille, pour les terminaux mobiles, économiser l'énergie. Il est donc coûteux, pour un terminal mobile, d'avoir à interroger régulièrement des serveurs dans le cadre, par exemple, d'une application de messagerie. Il est beaucoup plus simple que le serveur de messagerie envoie un message vers le terminal mobile lorsqu'un message lui est destiné.

De plus les capacités de contrôle d'un appareil, de type terminal mobile, par des scripts ou des "applets" compatibles avec ce terminal mobile sont bien plus étendues que dans le domaine des ordinateurs personnels. Il faut donc être très méfiant dans la manipulation de ces contenus actifs dans un terminal mobile. D'ailleurs, un utilisateur prudent, les refuse de manière quasi-systématique.

Un autre problème existant avec les terminaux mobiles est à la fois, leur faible capacité de stockage, et leur puissance de calcul réduite. Cela ne permet pas, d'une part, le stockage d'une base de données de certificats, d'autre part, l'exploitation en temps réel de cette base de données de certificats. Une solution calquée sur celle existant dans le domaine des ordinateurs personnels n'est donc pas applicable dans le domaine de la téléphonie mobile. De plus une telle solution, si elle était réalisée ne serait pas ergonomique car elle solliciterait, tout comme dans le domaine des ordinateurs personnels, l'utilisateur du terminal. Cela n'est donc pas optimal.

Des solutions pour limiter le téléchargement de contenus actifs existent pour protéger des ordinateurs. Ces solutions, décrites par exemple dans WO 98/21683 ou GB 2 359 908, sont basées sur la détection de contenus interdits.

Dans l'invention on résout ces problèmes en déportant la fonction de sécurisation au niveau de l'opérateur. Ainsi, dans l'invention, un utilisateur abonné à l'opérateur, accède à des contenus actifs, de manière sollicitée ou non sollicitée, à sa guise. L'ensemble des informations auxquelles souhaite accéder l'utilisateur transite par l'opérateur, c'est-à-dire par l'un de ses serveurs. L'opérateur va donc analyser l'ensemble des données transitant par ses serveurs à la recherche de contenus actifs. Lorsque l'opérateur détecte un contenu actif, il détermine qui en est émetteur. Si l'émetteur est connu et agréé par l'opérateur, alors ledit opérateur vérifie si l'abonné auquel est destiné le contenu actif souhaite bien recevoir ce type de contenu actif. Si l'abonné est d'accord pour recevoir ce type de contenu actif alors l'opérateur lui transmet ledit contenu actif. Cette sécurisation est totalement transparente pour l'utilisateur abonné à l'opérateur. Cela permet à l'utilisateur d'utiliser son terminal sans ce soucier de la sécurité de cette utilisation, cette sécurité étant à la charge de l'opérateur. L'utilisateur peut cependant configurer son terminal en fonction des types de contenu qu'il souhaite voir bloqués par l'opérateur. Cette configuration est, soit stockée sur le terminal et communiquée régulièrement au serveur de l'opérateur en charge de la sécurité, soit directement stockée sur un serveur de l'opérateur. Dans ce cas l'utilisateur peut accéder à ce serveur pour modifier sa configuration.

L'invention a donc pour objet un procédé de sécurisation déportée d'un téléchargement de données actives dans un terminal par un opérateur, tel qu'énoncé dans la revendication 1.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration de moyens utiles à la mise en oeuvre du procédé selon invention ;
- Figure 2 : une illustration d'étapes du procédé selon l'invention ;
- Figure 3 : une illustration de champs que comporte une trame permettant à un prestataire de communiquer avec l'opérateur ;
- Figure 4 : une illustration d'une trame permettant à l'opérateur de communiquer avec un terminal.

Dans la description qui suit, il est question d'opérateur, d'abonné, et de prestataire. Tous agissent sur un ou plusieurs réseaux. L'abonné utilise un terminal de téléphonie mobile pour communiquer avec des appareils gérés par l'opérateur. Le prestataire possède un serveur lui permettant de communiquer avec des appareils de l'opérateur. Dans la description on prête des actions au terminal, à l'abonné, à l'opérateur et au prestataire. Il est bien entendu que ces actions sont effectuées par des appareils correspondant à ces différentes entités. Ainsi une action effectuée par l'abonné est réalisée via son terminal et le microprocesseur que comporte ce terminal. Ce microprocesseur est commandé par des codes instructions enregistrés dans une mémoire du terminal. Il en va de même pour les serveurs des opérateurs et prestataires. Chaque serveur comporte un microprocesseur et une mémoire de programme comportant des codes instructions pour commander ces microprocesseurs.

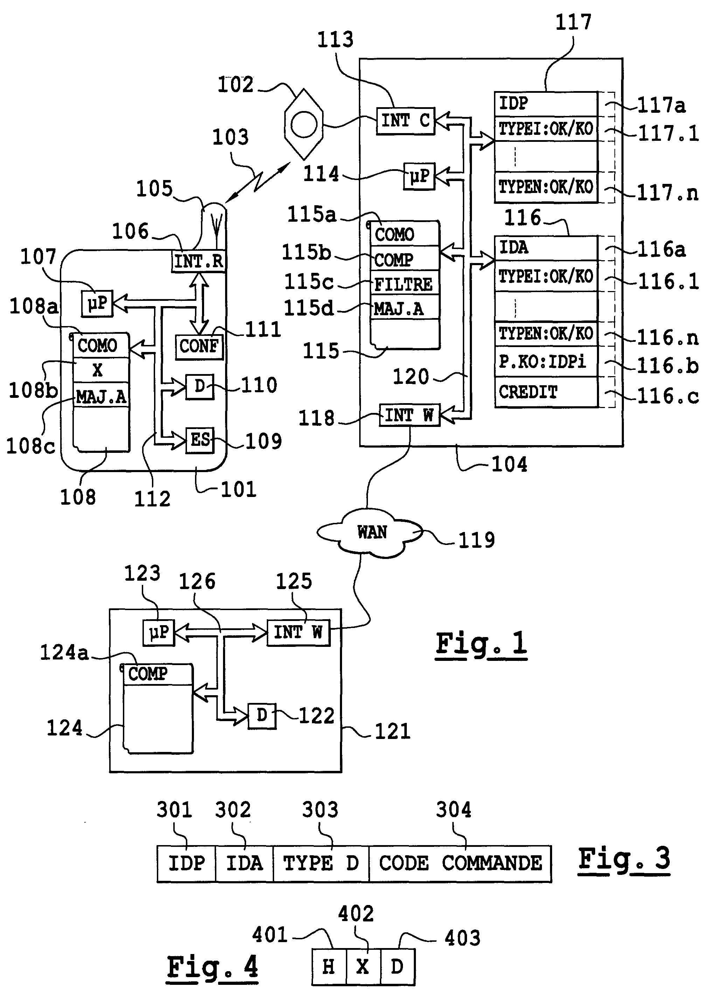

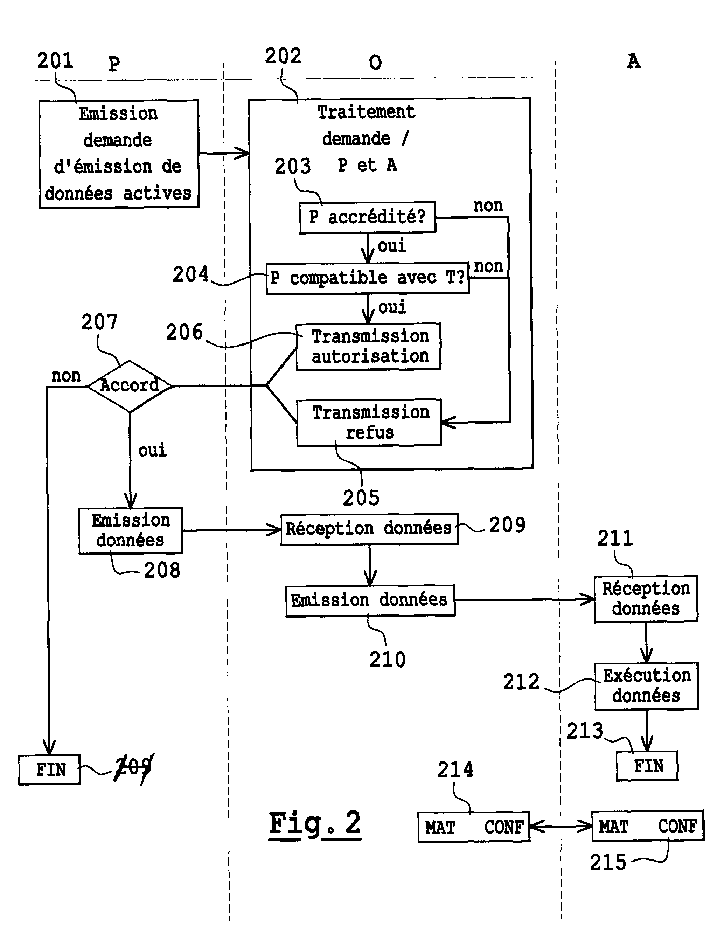

La figure 1 montre un terminal 101 connecté à un réseau 102 de télécommunication via une liaison 103 hertzienne. Pour les besoins de la description, et dans un mode de réalisation préféré, on considère que le réseau 102 est un réseau cellulaire de téléphonie mobile, et que le terminal 101 est donc un téléphone mobile. Le réseau 102 est géré par un opérateur de téléphonie mobile via des serveurs connectés à ce réseau 102. La figure 1 montre un tel serveur 104.

Le terminal 101 comporte une interface de communication lui permettant d'établir la liaison 103 avec le réseau 102. Cette interface de communication est composée d'une antenne 105 et de circuits 106 interface radio assurant le transcodage entre des signaux analogiques existant du côté de l'antenne 105 et des signaux numériques existant dans le terminal 101. De manière classique le terminal 101 comporte un microprocesseur 107, une mémoire 108 de programme, et des moyens 109 d'entrées/sorties. Les moyens 109 sont, entre autres, un clavier et un écran.

Le terminal 101 comporte aussi une mémoire 110 de données. C'est dans cette mémoire que sont enregistrées les données actives reçues par le terminal 101. Une mémoire 111, du terminal 101, permet d'enregistrer la configuration de ce terminal, et en particulier permet d'enregistrer quel doit être le comportement du terminal 101 en fonction du type de données actives reçues.

La mémoire 108 comporte plusieurs zones. En particulier la mémoire 108 comporte une zone 108a comportant des codes instructions commandant le microprocesseur 107 lorsque le terminal 101 communique avec le serveur 104, c'est-à-dire lorsque le téléphone 101 communique avec l'opérateur. Une zone 108b comporte des codes instructions correspondant à l'interprétation, ou exécution, des données actives reçues par le terminal 101. Le terminal 101 comporte une zone 108c correspondant à une mise à jour de la configuration de l'abonné au niveau du serveur 104.

Pour le terminal 101, comme pour les autres appareils dont la description est à venir, on décrit un certain nombre de mémoires. Pour un appareil donné, l'ensemble de ces mémoires, peuvent très bien n'être que plusieurs zones d'une seule et même mémoire. La représentation en éléments éclatés simplifie la compréhension.

Les éléments 106 à 111 sont connectés par un bus 112. Le réseau 102, et donc le terminal 101, fonctionnent selon l'une quelconque des normes de téléphonie mobile existantes ou à venir. Parmi ces normes on peut citer, pour exemple, le GSM, le PCS, le DCS, le GPRS et l'UMTS.

Le serveur 104 de l'opérateur comporte des circuits 113 lui permettant d'établir une interface entre le réseau 102 et le serveur 104. Le serveur 104 comporte un microprocesseur 114 ainsi qu'une mémoire 115 de programme. La mémoire 115 est divisée en plusieurs zones comportant des codes instructions commandant le microprocesseur 114 selon les circonstances. Une zone 115a permet au serveur 104 de communiquer avec le terminal 101, une zone 115b permet au serveur 104 de communiquer avec un prestataire souhaitant agir sur le réseau 102 de l'opérateur. Une zone 115c permet au serveur 104 d'effectuer des opérations de filtrage parmi des messages reçus par le serveur 104. Une zone 115d permet au serveur 104 d'effectuer la mise à jour d'une table 116 d'abonnés à l'opérateur.

Le serveur 104 comporte aussi une table 117 de prestataires. Le terminal 104 comporte aussi des circuits 118 interface entre le serveur 104 et un réseau 119 de télécommunication, par exemple le réseau Internet. Les éléments 113 à 118 sont connectés à un bus 120.

Les tables 116 et 117 sont des mémoires structurées en table. Chaque ligne correspond à une information, chaque colonne correspond à un enregistrement. La table 116 permet d'enregistrer des informations sur des abonnés à l'opérateur, et la table 117 permet d'enregistrer des informations sur des prestataires souhaitant agir sur le réseau de l'opérateur gérant le serveur 104.

La table 117 comporte une ligne 117a correspondant à un identifiant du prestataire, et des lignes 117.1 à 117.n correspondant aux autorisations du prestataire selon des types de données que le prestataire est autorisé à émettre sur le réseau de l'opérateur. Chaque ligne correspond alors à un type.

La table 116 comporte une ligne 116a pour y enregistrer un identifiant de l'abonné. Dans le cas d'un réseau de téléphonie mobile, l'identifiant de la ligne 116a est, par exemple, un numéro de téléphone, ou un numéro de carte SIM. La table 116 comporte aussi des lignes 116.1 à 116.n correspondant à la description des types de données que souhaite, ou ne souhaite pas, recevoir l'abonné. Chaque ligne 116.1 à 116.n correspond alors à un type de données, et chaque ligne renseigne donc sur le fait que l'abonné souhaite, ou ne souhaite pas, recevoir ce type de données. La table 116 comporte aussi une ligne 116b où l'on peut enregistrer des identifiants de prestataires. Cette ligne correspond en fait à une liste noire de l'abonné. Tous les prestataires dont l'identifiant est enregistré dans cette ligne, pour un abonné donné, sont les prestataires desquels l'abonné ne souhaite plus recevoir aucun type de données. La ligne 116c permet d'enregistrer le crédit de l'abonné. En effet il est possible que la réception de certaines données soient soumises à l'acquittement d'un droit, dans ce cas il faut bien pouvoir s'assurer que l'abonné est bien titulaire de ces droits.

La figure 1 montre aussi un serveur 121 correspondant à un appareil d'un prestataire souhaitant agir sur le réseau 102 de l'opérateur gérant le serveur 104. Pour la description, on considère que le prestataire, ou serveur, 121 souhaite transférer des données actives enregistrées dans une mémoire 122 au terminal 101. Le serveur 121 comporte un microprocesseur 123, une mémoire de programme 124, et des circuits 125 interface de communication avec le réseau 119. Les éléments 122 à 125 sont connectés par un bus 126. La mémoire 124 comporte une zone 124a permettant de mettre en oeuvre des fonctions de communication avec le serveur 104 de l'opérateur.

L'ensemble d'éléments décrits pour la figure 1 est mis en oeuvre par le procédé selon l'invention. Des étapes de ce procédé sont illustrées par la figure 2.

La figure 2 montre une étape 201 préliminaire d'émission d'une demande d'émission de données actives par le prestataire. Dans l'étape 201, le prestataire, c'est-à-dire en fait le serveur 121, compose une trame telle que décrite à la figure 3. Cette trame, ou requête, comporte un champ 301 identifiant le prestataire, un champ 302 identifiant un abonné de l'opérateur, un champ 303 identifiant le type de données que souhaite transmettre le prestataire, et un champ 304 correspondant à un code identifiant la nature de la requête. lci il s'agit d'une requête de demande d'émission de données actives. Cette requête, une fois composée, est émise par le prestataire vers l'opérateur. Cette émission est gérée par la mise en oeuvre d'un protocole de communication implémenté par les codes instructions des zones 124a et 115b. Cette requête transite donc par le réseau 119 puis est reçue par les circuits 118 et est enfin traitée par le microprocesseur 114. Ce traitement correspond à une étape 202 de traitement de la demande en fonction du prestataire et de l'abonné.

L'étape 202 peut être divisée en plusieurs sous étapes. Une première sous-étape 203 correspond à une vérification de l'accréditation, ou agrément, du prestataire. Dans la sous-étape 203 l'opérateur vérifie si l'identifiant 301 est bien présent dans la première ligne de la table 117. Si c'est le cas l'opérateur vérifie, dans la colonne repérée par l'identifiant 301 dans la table 117, si ledit prestataire est autorisé à transmettre sur le réseau 102 le type de données identifié par le champ 303. Cela se fait en recherchant dans la colonne correspondant au prestataire la ligne correspondant au type identifié par le champ 303. Cette ligne renseigne donc sur l'autorisation du prestataire pour le type de données identifié par le champ 303. Si le prestataire est présent dans la table 117, et si il a le droit de transmettre le type de données identifié par le champ 303 alors on passe à une sous-étape 204, sinon on passe à une sous-étape 205 de transmission d'un refus.

Dans la sous-étape 204, soit une deuxième sous-étape d'identification de l'abonné, l'opérateur vérifie si la requête du prestataire est compatible avec la configuration de l'abonné. Pour ce faire, l'opérateur recherche dans la table 116 l'identifiant enregistré dans le champ 302. Une fois l'abonné trouvé dans la table 116, l'opérateur recherche si, parmi les lignes 116.1 à 116.n, le type de données identifié par le champ 303 est autorisé pour l'abonné. Dans la sous-étape 204 l'opérateur vérifie aussi si l'identifiant enregistrer dans le champ 301 n'est pas dans la liste de ligne 116b, correspondant à l'abonné identifié par le champ 302. Si l'abonné, identifié par le champ 302, est présent dans la table 116a, si cet abonné autorise la réception du type de donnée enregistrées dans le champ 303, et si le prestataire identifié par le champ 301 n'est pas dans la liste 116b noire de l'abonné, alors on passe à une sous-étape 206 de transmission d'autorisation.

On remarque que l'ordre des sous étapes 203 et 204 peut être inversé. Les sous-étapes 203 et 204 constituent un filtrage des messages reçus par l'opérateur à destination d'un abonné. Ce filtrage est réalisé en fonction des émetteur et récepteur du message, ainsi qu'en fonction de la nature du contenu du message. Ce filtrage constitue, vu de l'abonné, une sécurisation des messages qu'il reçoit effectivement, dans le sens ou les messages indésirables ne lui parviennent jamais.

Dans la sous-étape 206, l'opérateur transmet au prestataire une trame d'autorisation signifiant que le prestataire est autorisé à transmettre les données actives avec les paramètres spécifiés dans la requête précédemment émise à l'étape 201.

Dans la sous-étape 205 l'opérateur envoie au prestataire une trame signifiant qu'il n'est pas autorisé à transmettre ses données actives à l'abonné.

On passe de l'étape 202 à une étape 207 de traitement, par le prestataire, de la réponse à sa requête. En cas d'autorisation on passe à une étape 208 d'émission des données, sinon on passe à une étape de fin.

Dans l'étape 208 le prestataire émet alors des données actives à destination de l'abonné 101. Ces données sont émises selon le protocole implémenté par les zones 124a et 115b. Dans l'étape 208, les données sont encapsulées dans des trames du protocole de communication utilisé par l'opérateur et le prestataire pour communiquer. Ces trames peuvent inclure un identifiant d'autorisation. Un tel identifiant est émis, par exemple, par le prestataire en même temps que la trame d'autorisation dans la sous-étape 206. Un tel identifiant d'autorisation permet à l'opérateur de contrôler les données transmises par les prestataires, car il devient alors impossible de transmettre des données actives sans autorisation préalable, c'est-à-dire sans que ces données soient accompagnées par un identifiant d'autorisation, et que cet identifiant corresponde aux données.

Dans une étape 209 l'opérateur reçoit des données actives. Dans la mesure où une autorisation a déjà été accordée pour la transmission de ces données, on peut passer directement à une étape 210 d'émission de ces données vers l'abonné, mais dans l'étape 209 l'opérateur peut aussi vérifier que les données actives reçues correspondent bien à celles pour lesquelles l'autorisation à été attribuée, via l'identifiant d'autorisation par exemple.

Dans l'étape 210 l'opérateur met en forme les données reçues de la part du prestataire pour les transmettre à l'abonné. Cette mise en forme est utile car les protocoles utilisés pour la communication entre le prestataire et l'opérateur ne sont pas forcément les mêmes que les protocoles utilisés pour la communication entre l'opérateur et l'abonné. Par exemple, les données peuvent être transmises, entre l'opérateur et l'abonné sur le deuxième réseau géré par l'opérateur, via un ou plusieurs messages courts. Un tel message court est alors illustré à la figure 4. Le message court comporte un en-tête 401 standard, suivi d'un champ 402 indiquant qu'il s'agit de données actives, puis d'un champ 403 comportant les données. Les communications entre le prestataire et l'opérateur peuvent être réalisées selon un protocole Internet standard (TCP, FTP, ...) ou tout autre protocole sur lequel l'opérateur et le prestataire se seraient entendus. Ces communications opérateur/prestataires sont réalisées via un premier réseau qui peut être n'importe quel réseau de télécommunication, par exemple Internet ou un autre réseau même privé.

De l'étape 210 on passe à une étape 211 de réception des données par l'abonné. On constate, dans l'invention, qu'il n'y a pas de négociation pour savoir si l'abonné souhaite recevoir les données actives émises par le prestataire. En effet ces négociations ont déjà eu lieu lorsque l'abonné a configuré son téléphone. Les données sont transmises, entre l'opérateur et l'abonné, en utilisant le protocole implémenté dans les zones 108a et 115a. Lorsqu'il reçoit des données actives sur son terminal, celles-ci sont alors enregistrées dans la mémoire 110. On passe alors à une étape 212 d'exécution des données actives.

Dans l'étape 212, le microprocesseur 107 parcours la mémoire 110, en étant commandé par les codes instructions de la zone 108b. Si la mémoire 110 comporte des données actives, en fait des programmes écrits dans un langage susceptible d'être interprété par les codes instructions de la zone 108b, alors ces programmes sont exécutés. En effet l'innocuité du contenu de la mémoire 110 est garantie par l'opérateur. De l'étape 212 on passe à une étape 213 de fin.

Dans une variante de l'invention, il n'y a pas d'échanges protocolaires entre l'opérateur et le prestataire. Le prestataire se contente d'émettre un message destiné à un abonné, message contenant des données actives. L'opérateur vérifie que le prestataire est bien connu, et accrédité, et que l'abonné souhaite recevoir ce type de données actives de la part de ce prestataire. Dans ce cas l'opérateur transmet directement les données actives à l'abonné sans émettre d'autorisation de transmission vers le prestataire.

Dans une autre variante de l'invention, l'opérateur reçoit de la part d'un prestataire, un message comportant des données actives et un certificat permettant d'identifier et d'accréditer le prestataire. L'opérateur se charge alors de vérifier la validité du certificat et, si ce certificat est valide et que l'abonné n'a pas mis le prestataire dans sa liste noire, l'opérateur transmet alors les données actives vers l'abonné.

On voit ici que le but de l'invention est bien de déporter la sécurisation du contenu de données actives vers un opérateur pour soulager la charge de travail effectué par les terminaux des abonnés à l'opérateur.

Pour déterminer qu'un message comporte des données actives, on a envisagé que ce message comporte un champ décrivant la nature des données que comporte le message. Il existe d'autres moyens pour déterminer la nature de ces données. En général un contenu actif est un fichier ayant un nom et un en-tête. Le nom d'un fichier, et en particulier l'extension de ce nom, renseigne sur la nature du fichier, c'est-à-dire sur la nature du contenu du fichier. De même l'en-tête d'un fichier fourni aussi ces informations de nature. Nom et en-tête permettent aussi de lier un fichier à une application. Si cette application permet l'interprétation de données actives, alors c'est que le fichier comporte des données actives. Il existe ainsi de nombreux moyens de déterminer la nature de données reçues via un message.

L'invention présente de nombreux avantages car les données actives sont de plus en plus nombreuses à être transférées. En effet, l'interactivité des données accessibles sur les réseaux via un simple terminal de téléphonie mobile a tendance à augmenter. Cette interactivité est obtenue, en partie, grâce à des données actives. Ces données actives sont celles citées dans le préambule de la demande, et transmises selon les modes eux aussi décrits dans le préambule. La sécurisation des données actives par l'opérateur est donc à la fois un plus au niveau de la confiance que peut avoir l'abonné dans ces données, et une sauvegarde d'énergie pour les terminaux.

On peut aussi mettre en oeuvre l'invention dans le cadre d'une application exécutée par un terminal mais ayant besoin d'avoir recours à des fonctions implémentées dans une librairie qui n'est pas présente sur le terminal. Cette librairie doit alors être téléchargée sur le terminal depuis un serveur présent sur un réseau. Cette librairie est en fait fournie par un prestataire. Cette librairie est un contenu actif. Le téléchargement de cette librairie, aussi appelé DLL, est alors soumis à un contrôle de la part de l'opérateur. Ce contrôle est du type de celui présenté pour l'invention.

La figure 2 montre aussi les étapes 214 et 215 de mise à jour de la configuration. L'étape 214 correspond à une mise à jour du côté de l'opérateur, l'étape 215 correspond à une mise à jour du côté de l'abonné. On peut envisager plusieurs modes de sauvegarde de la configuration d'un terminal.

Dans un mode préféré, la configuration d'un terminal est enregistrée dans la table 116. Dans ce cas lorsque l'abonné souhaite modifier sa configuration, il émet une requête, grâce à son terminal, en direction de l'opérateur pour rapatrier le contenu de la table 116 le concernant dans la mémoire 111. Cette mémoire 111 est alors éditée via les moyens 109 d'entrées / sorties. Une fois cette édition terminée, l'abonné transfère le contenu édité dans la mémoire 111 vers la mémoire 116. Ce mode de réalisation préféré permet à l'opérateur de connaître en permanence la configuration du terminal 101.

Un autre mode de réalisation consiste à sauvegarder la configuration dans la mémoire 111. Dans ce cas à chaque fois que l'opérateur a besoin de connaître la configuration du terminal 101, l'opérateur doit interroger le terminal. On peut aussi envisager une interrogation périodique, par l'opérateur, du terminal 101. Avec une période raisonnable il est ainsi possible de maintenir une bonne cohérence entre le contenu de la mémoire 111 et le contenu de la table 116. Cependant cette solution a tendance à légèrement accroître les communications entre l'opérateur et le terminal.

Dans une variante de l'invention, la fonction de sécurisation, et la fonction de sauvegarde de configuration ne sont pas implantées sur le même serveur 104, mais sur deux, ou plus, serveurs distincts de l'opérateur. Dans ce cas ces serveurs communiquent entre eux pour se fournir les informations dont ils ont besoin.

Il est possible, que l'accès à certains contenus actifs soit-payant. On peut envisager, par exemple, le cas d'un journal électronique diffuser sur le réseau 102. Dans ce cas le prestataire est aussi l'éditeur du journal. L'éditeur émet alors un message, comportant des donnés actives, à destination de l'abonné. Ce message permet à l'abonné de télécharger, contre paiement, le journal. Le contenu actif est alors le programme de téléchargement et de paiement. Dans ce cas si l'abonné, dans la configuration de son terminal, a autorisé ce type de contenu, l'opérateur, avant de transférer ce contenu, vérifie que le crédit de l'abonné est bien suffisant pour réaliser l'opération. Si le crédit est suffisant alors l'opérateur débite l'abonné pour créditer le prestataire puis il transfère le contenu actif vers l'abonné. L'abonné pourra alors télécharger son journal électronique, par exécution du contenu actif.

On voit que le procédé selon l'invention est valable dans le cadre de transmissions de données actives, que ces transmissions soient sollicitées ou non sollicitées. En effet toutes les données actives transitent par l'opérateur. Toutes les données actives peuvent donc être sécurisées par l'opérateur. Par sollicitées on entend des données actives émises suite à une requête émise par le terminal. Par non sollicitées on entend données actives émises à l'initiative du prestataire.

Dans la mesure où le prestataire s'est entendu avec l'opérateur, il est possible de laisser un contrôle quasi total au prestataire sur les fonctions du terminal. Ainsi parmi les exemples d'applications possibles on peut citer des contenus actifs dont l'interprétation aurait les conséquences suivantes : le chargement, et l'interprétation, non sollicités d'un fichier au format HTML, l'ouverture d'un port du terminal permettant de communiquer directement avec ce terminal, le lancement d'une session avec un serveur de messagerie, ou la mise à jour d'une base de données du terminal.

## Revendications

1. Procédé de sécurisation déportée d'un téléchargement de données actives d'un prestataire (121) dans un terminal (101) d'un abonné par un opérateur, le procédé comportant les étapes suivantes:
- le prestataire émet (201), vers l'opérateur et via un premier réseau, un message de demande d'émission de données non sollicitées, ces données étant actives, le message comportant un identifiant d'un destinataire,
- l'opérateur (104) reçoit et traite (202) la demande d'émission en fonction de l'identité du prestataire et de l'identifiant du destinataire,
l'opérateur, assurant l'interface entre le terminal et un prestataire émettant les données actives, mettant en oeuvre les étapes suivantes :
- réception (202), via le premier réseau de télécommunication, dudit message,
- détermination (202) de la nature du contenu du message reçu, pour savoir si la nature du message reçu est telle que ce message reçu comporte des données actives,
- identification (203) du prestataire émettant les données actives,
- vérification (203), via une mémoire de prestataires, de l'accréditation du prestataire, selon la nature du contenu du message, sur un deuxième réseau géré par l'opérateur,
- identification (204), via une mémoire d'abonnés, du terminal destinataire des données actives,
- vérification (204) de la configuration du terminal destinataire relativement au type de données actives que l'utilisateur du terminal souhaite recevoir,
- si la configuration est compatible avec les données actives, et si le prestataire est accrédité, alors l'opérateur relaie (209 - 210) les données actives vers le terminal.

2. Procédé selon la revendication 1, **caractérisé en ce que** les données actives sont émises (201) à l'initiative du prestataire.

3. Procédé selon l'une des revendication 1 ou 2, **caractérisé en ce que** les données actives sont émises (201) suite à une requête émise par le terminal.

4. Procédé selon l'une des revendications 1 à 3, l'opérateur relaie (210) les données actives vers le terminal via au moins un message (401-403) court.

5. Procédé selon la revendication 4, **caractérisé en ce que** le message court comporte un champ (402) pour identifier la nature des données que comporte le message court.

6. Procédé selon l'une des revendications 1 à 5, **caractérisé en ce que**:
- l'opérateur (205-206) envoie une trame de réponse, positive ou négative, au prestataire,
- le prestataire (207-208), en fonction de la trame de réponse, émet les données actives vers le terminal destinataire, via l'opérateur,
- l'opérateur (209-211) transmet les données actives vers le terminal qui les enregistre.

7. Procédé selon l'une des revendications 1 à 6, **caractérisé en ce que** le terminal, interprète (212) les données actives pour réaliser la fonction transmise par ces données.

8. Procédé selon l'une des revendications 1 à 7, **caractérisé en ce que** un abonné met à jour (215), à distance, la mémoire d'abonnés de l'opérateur.

9. Procédé selon l'une des revendications 1 à 8, **caractérisé en ce que** l'opérateur interroge (214) automatiquement le terminal pour obtenir sa configuration et mettre à jour la mémoire d'abonnés.

10. Procédé selon l'une des revendications 1 à 9, **caractérisé en ce que** la configuration du terminal comporte une liste (116b), enregistrée dans une mémoire, pour désigner des prestataires dont l'utilisateur du terminal ne souhaite pas recevoir de données.

## Patentansprüche

1. Verfahren zur Sicherung eines Herunterladens von aktiven Daten eines Providers (121) in ein Endgerät (101) eines Teilnehmers durch einen Betreiber, wobei das Verfahren die folgenden Schritte aufweist:
- der Provider sendet (201) an den Betreiber und über ein erstes Netz eine Nachricht zur Anforderung einer Sendung von nicht angeforderten Daten, wobei diese Daten aktiv sind und die Nachricht eine Kennung eines Empfängers enthält,
- der Betreiber (104) empfängt und behandelt (202) die Sendeanforderung in Abhängigkeit der Identität des Providers und der Kennung des Empfängers,
wobei der Betreiber, welcher die Schnittstelle zwischen dem Endgerät und einem die aktiven Daten sendenden Provider sicherstellt, die folgenden Schritte durchführt:
- Empfangen (202) der genannten Nachricht über das erste Telekommunikationsnetz,
- Bestimmen (202) der Art des Inhalts der empfangenen Nachricht, um zu wissen, ob die empfangene Nachricht derart ist, dass diese empfangene Nachricht aktive Daten enthält,
- Identifizieren (203) des die aktiven Daten sendenden Providers,
- Überprüfen (203) - über einen Provider-Speicher - der Akkreditierung des Providers je nach Art des Inhalts der Nachricht über ein zweites, vom Betreiber verwalteten Netz,
- Identifizieren (204) - über einen Teilnehmer-Speicher - des die aktiven Daten empfangenden Endgeräts,
- Überprüfen (204) der Konfiguration des Empfänger-Endgeräts bezüglich des Typs von aktiven Daten, die der Benutzer des Endgeräts zu empfangen wünscht,
- wenn die Konfiguration mit den aktiven Daten kompatibel ist und wenn der Provider akkreditiert ist, leitet der Betreiber die aktiven Daten zum Endgerät weiter (Relaying) (209-210).

2. Verfahren nach Anspruch 1, **dadurch gekennzeichnet, dass** die aktiven Daten auf Initiative des Providers gesendet werden (201).

3. Verfahren nach einem der Ansprüche 1 oder 2, **dadurch gekennzeichnet, dass** die aktiven Daten infolge einer durch das Endgerät gesendeten Anfrage gesendet werden (201).

4. Verfahren nach einem der Ansprüche 1 bis 3, **dadurch gekennzeichnet, dass** der Betreiber die aktiven Daten zu dem Endgerät über mindestens eine Kurznachricht (401-403) weiterleitet (Relaying) (210).

5. Verfahren nach Anspruch 4, **dadurch gekennzeichnet, dass** die Kurznachricht ein Feld (402) zur Identifizierung der Art der in der Kurznachricht enthaltenen Daten enthält.

6. Verfahren nach einem der Ansprüche 1 bis 5, **dadurch gekennzeichnet, dass**
- der Betreiber (205-206) dem Provider einen positiven oder negativen Antwortrahmen sendet,
- der Provider (207-208) die aktiven Daten zum Empfängergerät über den Betreiber in Abhängigkeit des Antwortrahmens sendet,
- der Betreiber (209-211) die aktiven Daten zu dem Endgerät überträgt, welches sie speichert.

7. Verfahren nach einem der Ansprüche 1 bis 6, **dadurch gekennzeichnet, dass** das Endgerät die aktiven Daten auslegt (212), um die von diesen Daten übertragene Funktion zu realisieren.

8. Verfahren nach einem der Ansprüche 1 bis 7, **dadurch gekennzeichnet, dass** ein Teilnehmer den Teilnehmer-Speicher des Betreibers fernaktualisiert (215).

9. Verfahren nach einem der Ansprüche 1 bis 8, **dadurch gekennzeichnet, dass** der Betreiber das Endgerät automatisch abfragt (214), um dessen Konfiguration zu erhalten und den Teilnehmer-Speicher zu aktualisieren.

10. Verfahren nach einem der Ansprüche 1 bis 9, **dadurch gekennzeichnet, dass** die Konfiguration des Endgeräts eine in einem Speicher gespeicherte Liste (116b) enthält, um Provider anzugeben, von denen der Benutzer des Endgeräts keine Daten zu empfangen wünscht.

## Claims

1. A method for remotely assuring security when downloading active data in a terminal by an operator, the operator who ensures the interface between the terminal and a provider sending the active data and the terminal implementing the following steps:
- the provider sends (201), to the operator and by a first network, a message for requesting the sending of unsolicited data, these data being active, the message comprising a recipient's identifier,
- the operator receive and process the request of sending depending on the provider's identity and on the recipient's identifier,
the operator, making the interface between a terminal and a provider sending active data, processing the following steps:
- receipt (202) of said message, by the first telecommunications network,
- determination (202) of the nature of the received message, to learn whether the nature of the received message is such that this received message includes active data,
- identification (203) of the provider sending the active data,
- verification (203) of the provider's accreditation, depending on the nature of the message, based on a provider memory on a second network managed by the operator,
- identification (204) of the receiving terminal of the active data based on a subscriber memory,
- verification (204) of the receiving terminal's configuration,
- if the configuration is compatible with the active data, and if the provider is approved, the operator relays (209 - 210) the active data to the terminal.

2. The method according to claim 1, **characterised in that** the active data is transmitted (201) on the provider's initiative.

3. The method according to one of claims 1 or 2, **characterised in that** the active data is transmitted (201) following a request sent by the terminal.

4. The method according to one of claims 1 to 3, **characterised in that** the operator relays (210) the active data to the terminal via at least one short message (401-403).

5. The method according to claim 4, **characterised in that** the short message includes a field (402) to identify the nature of data contained in the short message.

6. The method according to one of the claims 1 to 5, **characterised in that**:
- the provider sends (201) a request to the operator for authorisation to transmit unsolicited data, this data being active, the request including an addressee identifier,
- the operator receives and processes (202) the request for authorisation to transmit according to the provider's identifier and the recipient's identifier,
- the operator (205-206) sends a positive or negative response frame to the provider,
- based on the reply frame, the provider (207-208) transmits the active data to the receiving terminal via the operator,
- the operator (209-211) transmits the active data to the terminal which records them.

7. The method according to one of claims 1 to 6, **characterised in that** the terminal interprets (212) the active data to perform the function transmitted by that data.

8. The method according to one of claims 1 to 7, **characterised in that** a subscriber remotely updates (215), the operator's subscriber memory.

9. The method according to one of claims 1 to 8, **characterised in that** the operator automatically interrogates (214) the terminal to obtain its configuration and update its subscriber memory.

10. The method according to one of claims 1 to 9, **characterised in that** the terminal configuration includes a list (116b), recorded in a memory, to designate those providers from whom the terminal user does not wish to receive data.
